Europäisches Patentamt

European Patent Office

Office européen des brevets

(11) Veröffentlichungsnummer: **0 334 073**
A2

# (12) EUROPÄISCHE PATENTANMELDUNG

(21) Anmeldenummer: 89103715.2

(22) Anmeldetag: 03.03.89

(51) Int. Cl.⁴: **B29C 41/08** , **B29C 41/46** , **B29C 71/02**

(30) Priorität: 23.03.88 DE 3809825

(43) Veröffentlichungstag der Anmeldung:
27.09.89 Patentblatt 89/39

(84) Benannte Vertragsstaaten:
DE ES FR GB IT SE

(71) Anmelder: Krauss-Maffei Aktiengesellschaft
Krauss-Maffei-Strasse 2
D-8000 München 50(DE)

(72) Erfinder: Bauer, Adolf, Ing. (grad.)
Hedeweg 24 b
D-8037 Olching(DE)
Erfinder: Wagner, Peter, Dipl.-Ing. (FH)
Josef Lechenbauer-Strasse 9
D-8061 Weichs(DE)

(54) Verfahren und Vorrichtung zum Herstellen von Kunststoff-Formfolien.

(57) Bei einer Vorrichtung zum Herstellen von Kunststoff-Formfolien wird ein Formwerkzeug aufgeheizt und mit einem, fluiden Thermoplast-Kunststoff enthaltenden Behälter verbunden, worauf nach einer biaxialen Drehung des Formwerkzeugs und des Behälters auf der Oberfläche des aufgeheizten Formwerkzeugs eine Schicht aus Kunststoff aufschmilzt, die nach dem Abkühlen des Formwerkzeugs als Kunststoff-Formfolie entnommen wird. Zur Reduzierung des Energie- und Zeitaufwandes wird das Formwerkzeug mittels Heizstrahlern aufgeheizt.

Fig. 1

EP 0 334 073 A2

## Verfahren und Vorrichtung zum Herstellen von Kunststoff-Formfolien

Die Erfindung betrifft ein Verfahren und eine Vorrichtung zum Herstellen von Kunststoff-Formfolien gemäß Oberbegriff des Anspruchs 1

Bei bekannten Verfahren und Vorrichtungen dieser Art wird das Formwerkzeug nach dem Beschichten durch eine auf dem Formwerkzeug aufschmelzende Kunststoffschicht durch einen Durchlaufofen transportiert, in dem die Rückseite der Kunststoffschicht erhitzt und auf diese Weise nachgeglättet wird. Dieses Verfahren erfordert einen aufwendigen Anlagen- und Energieaufwand, da ein verhälnismäßig großvolumiger Durchlaufofen zu installieren ist, in dem eine große Luftmenge zu erhitzen ist, wobei Einrichtungen vorzusehen sind, um aus diesen Luftmengen schädliche Dämpfe und Gase auszusondern.

Der Erfindung liegt die Aufgabe zugrunde, ein Verfahren und eine Vorrichtung der genannten Art so auszubilden, daß bei nur in geringem Maße anfallenden Mengen an schädlichen Dämpfen und Gasen der Anlagen- und Energieaufwand zum Nachglätten der Rückseite der Kunststoff-Formfolie vermindert werden kann.

Die Lösung der Aufgabe ist in Anspruch 1 angegeben. Die Unteransprüche geben vorteilhafte Maßnahmen und Ausgestaltungen der Erfindung an.

Durch das Abdecken des Formwerkzeugs mittels einer mit einer Heizeinrichtung versehenen Nachglätthaube ist mit dem umschlossenen Werkzeughohlraum nur ein sehr geringes Volumen gegeben, mit dem die Menge der beim Nachglätten entstehenden schädlichen Dämpfe und Gase in engen Grenzen gehalten werden kann, wobei ein Entweichen in die Umwelt sicher ausgeschlossen werden kann. Darüberhinaus besteht der Vorteil, daß durch die Nachglätthaube der Pulverkasten mit dem Formwerkzeug in geschlossener Stellung gehalten werden kann und der Vorgang des Nachglättens ohne gesonderte Nachglättstation, wie z.B eien Durchlaufofen, beim Weitertransport des Formwerkzeugs von der Pulverbeschichtungsstation zur Kühlstation erfolgen kann. In der Kühlstation ergibt sich der weitere Vorteil, daß die Abkühlung im geschlossenen Zustand erfolgen kann, wodurch an den Oberflächen des Formwerkzeugs und der Kunststoff-Formfolie keine Störeinflüsse durch Wasserrückstände auftreten können.

In einer bevorzugten Ausführungsform besteht die Heizeinrichtung aus Strahlerelementen, wodurch die Rückseite der Kunststoff-Formfolie in besonders energie- und zeitsparender Weise nachgeglättet werden kann. Als Folge hiervon fallen auch nur geringe Mengen an schädlichen Dämpfen und Gasen an.

Zur Vergleichmäßigung der Temperatur in dem vom Formwerkzeug und der Nachglätthaube umschlossenen Werkzeughohlraum ist in der Nachglätthaube ein Gebläse vorgesehen, mit dem eine Umwälzung der geschlossenen Gase erzielt werden kann.

Eine Ausführungsform der Erfindung wird anhand der Zeichnung näher erläutert. Es zeigt :

Fig. 1 die Seitenansicht einer Formträgereinheit in der Strahlerheizstation mit einem Formwerkzeug in teilweiser Schnittdarstellung und mit an das Formwerkzeug herangefahrenen Heizstrahlerfeldern,

Fig. 2 die Formträgereinheit in der Beschichtungsstation mit angekoppeltem Pulverbehälter und noch geöffneter Nachglätthaube,

Fig. 3 die Formträgereinheit mit geschlossener Nachglätthaube und Darstellung der Drehachsen um die das Formwerkzeug drehbar ist,

Fig. 4 die Formträgereinheit mit geschlossener Nachglätthaube in der Kühlstation und,

Fig. 5 die Draufsicht auf die stark vereinfacht dargestellte Formträgereinheit mit den verschiedenen Bearbeitungsstationen.-

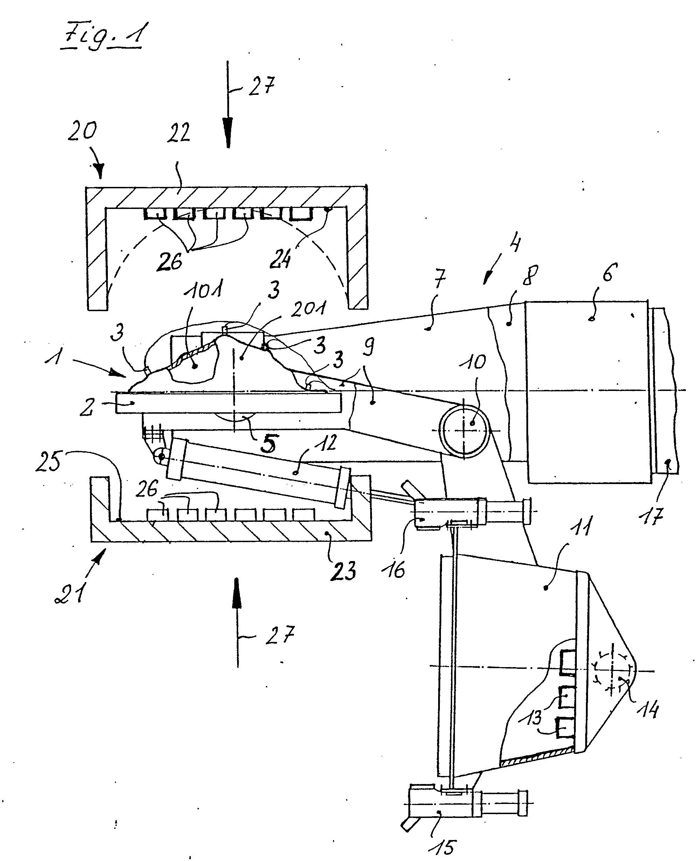

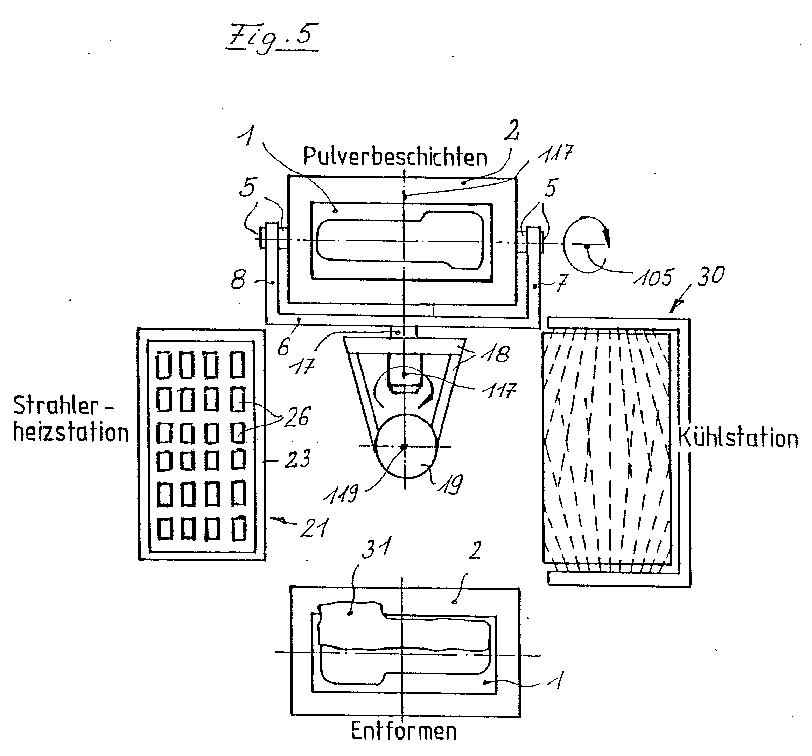

Die Fig.1 bis 5 zeigen eine Formträgereinheit mit einem aus einer Galvanoschale bestehenden und teilweise geschnitten dargestellten Formwerkzeug 1, das in einer Halterung 2 angeordnet ist. Am Formwerkzeug 1 ist eine Anzahl von Temperaturmeßfühlern 3 angeordnet. Die Halterung 2 wird von einem gabelartigen Haltebügel 4 umfaßt und ist an diesem an zwei Drehgelenken 5 angelenkt. Der Haltebügel 4 besteht aus einem Querarm 6 und zwei Gelenkarmen 7 und 8 (Fig. 5), von denen in den Fig. 1 bis 4 der Gelenkarm 7 vollständig und der Gelenkarm 8 nur in einem Teilstück dargestellt sind.

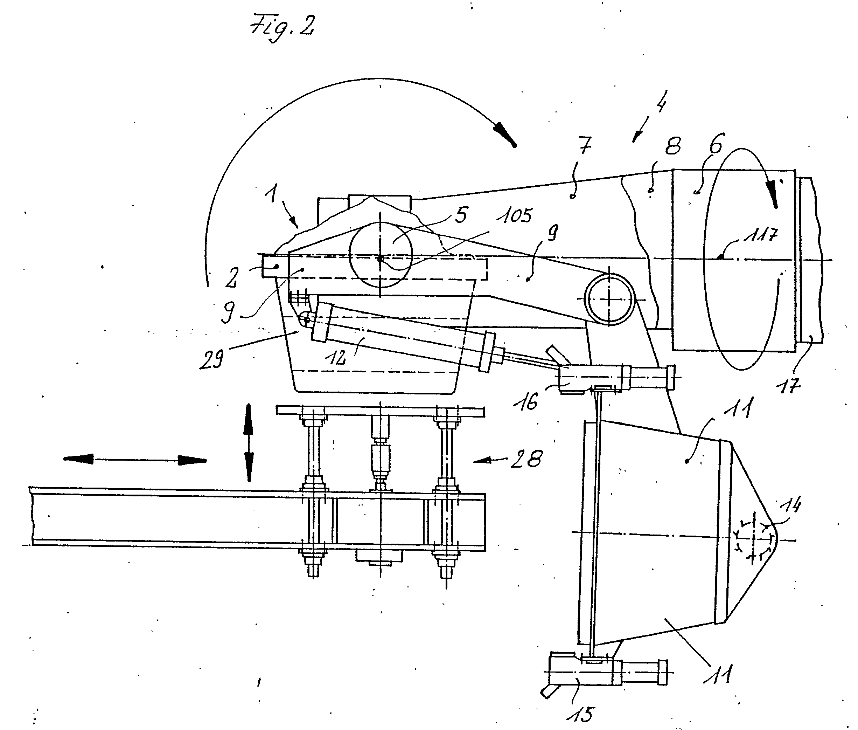

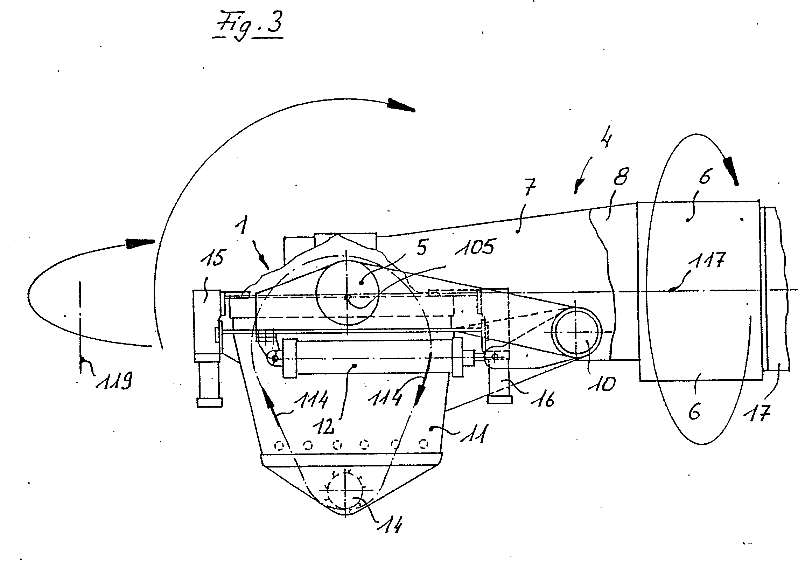

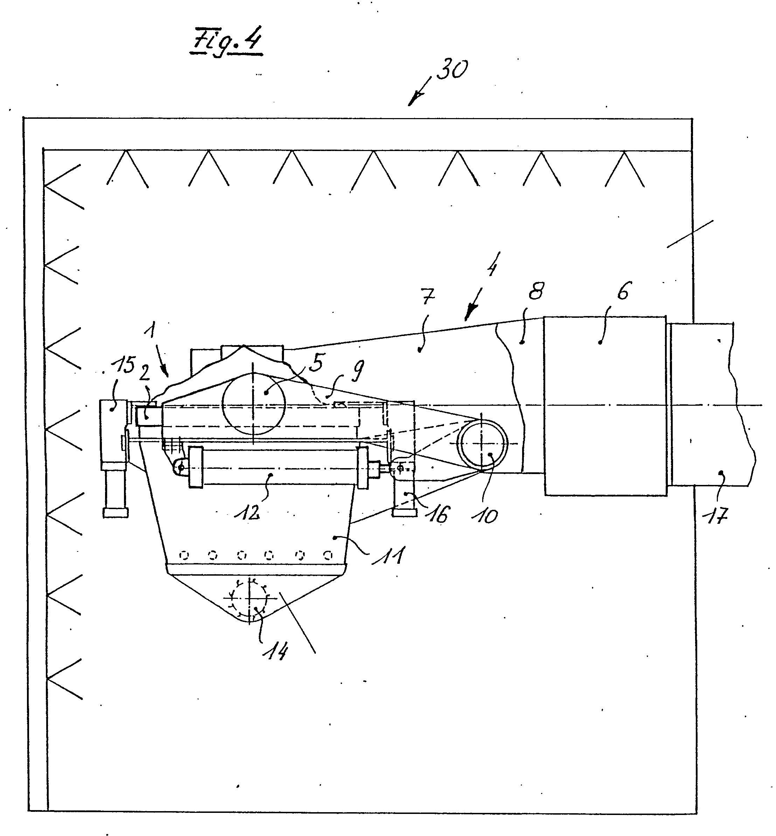

An der Halterung 2 ist ferner ein Halterahmen 9 angeordnet, an dem mittels eines Gelenks 10 eine Nachglätthaube 11 befestigt ist, die durch einen Stellzylinder 12 in eine offene Stellung gemäß der Darstellung nach Fig. 1 und 2 und in eine geschlossene Stellung gemäß der Darstellung nach Fig. 3 und 4 schwenkbar ist.

Im Bodenbereich der Nachglätthaube 11 sind Strahlerelemente 13 sowie ein Gebläse 14 angeordnet, mit dem im Inneren der Nachglätthaube 11, wie in Fig. 3 durch die Pfeile 114 dargestellt, eine Zirkulationsströmung erzeugbar ist. An den oberen Randbereichen sind an der Nachglätthaube 11 hydraulisch betätigbare Verriegelungselemente 15 und 16 angeordnet mit denen die Nachglätthaube 11 in geschlossener Stellung (Fig. 3 und 4) mit der Halterung 2 verriegelbar ist.

Der Querarm 6 des Haltebügels 4 ist an einer Welle 17 befestigt, die in einem Träger 18 und in einer Königswelle 19 drehbar gelagert ist (Fig. 5).

Das Formwerkzeug 1 ist bei geschlossener Nachglätthaube 11 im Drehgelenk 5 um eine erste Drehachse 105 und mittels der Welle 17 um eine zweite Drehachse 117 drehbar. Die gesamte Formträgereinheit ist mit der Königswelle 19 um die Schwenkachse 119 in die bestimmten Bearbeitungsstationen (Fig. 5) schwenkbar.

In der ersten Bearbeitungsstation, der Strahlerheizstation befinden sich zwei Heizstrahlerfelder 20 und 21, diejeweils aus einem offenen Behälter 22 und 23 bestehen, auf dessen Bodenplatte 24 und 25 eine Anzahl von Einzelstrahlern 26 angeordnet sind.

Im Betrieb (Fig.1) werden bei geöffneter Nachglätthaube 11 die Heizstrahlerfelder 20 und 21 in Richtung der Pfeile 27 herangefahren, so daß die Einzelstrahler 26 des oberen Heizstrahlerfeldes 20 auf die nichtformgebende Oberfläche 201 und die Einzelstrahler 26 des unteren Heizstrahlerfeldes 21 auf die formgebende Oberfläche 101 des Formwerkzeugs 1 gerichtet sind.

Nach der Erwärmung des Formwerkzeugs 1 in der Strahlerheizstation werden die Heizstrahlerfelder 20 und 21 entgegen der Richtung der Pfeile 27 auseinandergefahren, worauf die Formträgereinheit in die nächste Bearbeitungsstation, die Pulverbeschichtungsstation, geschwenkt wird. Dabei wird an das geöffnete Formwerkzeug 1 mittels einer Zuführeinrichtung 28 (Fig. 2) ein Pulverbehälter 29 angedockt, der durch nachfolgendes Schließen der Nachglätthaube 11 gegen das Formwerkzeug 1 gedrückt und in geschlossener Stellung gehalten wird.

Im weiteren wird der Pulverbehälter 29 nach erfolgter Rotation des geschlossenen Formwerkzeugs 1 um die Drehachsen 105 und 117 wieder entfernt, worauf die Nachglätthaube 11 wieder geschlossen und die Rückseite der Kunststoff-Formfolie 31 mit Strahlung aus den Strahlerelementen 13 der Nachglätthaube 11 beaufschlagt wird. Unter nochmaliger Rotation des Formwerkzeugs 1 um die Drehachsen 105 und 117 erfolgt dabei ein Nachgelieren bzw. ein Nachglätten der Kunststoff-Formfolie 31, wobei mittels des Gebläses 14 noch eine Vergleichmäßigung der Oberflächenbeheizung der Rückseite der Kunststoff-Formfolie 31 erzielt werden kann.

Durch das in der Nachglätthaube 11 angeordnete Feld aus Strahlerelementen 13 reichen gegenüber den herkömmlichen Verfahren zum Nachglätten, bei denen aufwendige Wärmeöfen erforderlich sind, bereits geringe Heizleistungen aus.

Der von der Nachglätthaube 11 und dem Formwerkzeug 1 umschlossene Werkzeughohlraum kann auch während des Nachgelierens zum Schutz vor Oxidation und/oder zum Kühlen mit Inertgas, beispielsweise Stickstoff, beaufschlagt werden. Dieses Gas kann über ein von der Königswelle 19 bis zum Werkzeughohlraum führendes Gasleitungssystem eingeleitet werden, das durch den Träger 18, die Welle 17 und den Haltebügel 4 verläuft, wobei an den Gelenkstellen bzw. den Rotationsachsen entsprechende Drehdurchführungen angeordnet sind.

Das Gasleitungssystem kann sowohl zum Einleiten von inertem Gas, als auch zum Absaugen von beim Nachglätten entstehenden schädlichen Dämpfen verwendet werden.

Das Gasleitungssystem kann dabei so ausgestaltet sein, daß der Werkzeughohlraum sowohl an einen Zuführungskanal als auch an einen Abführrungskanal (nicht dargestellt) angeschlossen ist.

Der Vorgang des Nachglättens kann auf dem Transport der Formträgereinheit von der Pulverbeschichtungsstation zur Kühlstation 30 erfolgen.

In der Kühlstation 30 wird das Formwerkzeug 1 bei geschlossener Nachglätthaube 11 mit Sprühwasser und/oder Luft abgekühlt, wobei der eingeschlossene Werkzeughohlraum gleichzeitig oder in einem bereits vorher eingeleiteten Arbeitsgang zur Unterstützung des Kühlvorganges noch durch eingeführtes Gas gekühlt werden kann.

Nach dem Abkühlen und dem Weitertansport der Formträgereinheit in die Entformstation wird die Nachglätthaube 11 aufgeklappt und die fertige Kunststoff-Formfolie 31 aus dem Formwerkzeug 1 entnommen.

## Ansprüche

1. Verfahren zum Herstellen von Kunststoff-Formfolien mittels eines Formwerkzeugs, das in einer Heizstation erwärmt, in einer Beschickungsstation mit fluidem, auf der Formoberfläche des Formwerkzeugs aufschmelzbarem Thermoplast-Kunststoff beschichtet und in einer Entformstation von der auf der Formoberfläche des abgekühlten Formwerkzeugs gebildeten Kunststoff-Formfolie getrennt wird, wobei die Rückseite der Kunststoff-Formfolie nach deren Aufschmelzen auf der Formoberfläche durch Wärmebehandlung nachgeglättet wird, **dadurch gekennzeichnet**, daß das Formwerkzeug (1) durch eine, eine Heizeinrichtung aufweisende Nachglätthaube (11) unter Einschluß eines Werkzeughohlraumes abgedeckt wird.

2. Verfahren nach Anspruch 1, **dadurch gekennzeichnet**, daß die Rückseite der Kunststoff-Formfolie durch von der Heizeinrichtung ausgehende Strahlung geglättet wird.

3. Verfahren nach Anspruch 1 und 2, **dadurch gekennzeichnet**, daß an das Formwerkzeug (1) ein Thermoplast-Kunststoff enthaltender Pulverbehälter angedockt wird, über den die Nachglätthaube (11) geschwenkt wird und diesen in Bezug auf das Formwerkzeug (1) in geschlossener Stellung hält.

4. Vorrichtung zur Durchführung des Verfahrens nach einem der vorangehenden Ansprüche, **dadurch gekennzeichnet**, daß das Formwerkzeug (1) in einer Halterung (2) gehalten ist an der die, Heizeinrichtung aufweisende Nachglätthaube (11) angelenkt ist.

5. Vorrichtung nach Anspruch 4, **dadurch gekennzeichnet**, daß die Heizeinrichtung aus Strahlerelementen (13) besteht.

6. Vorrichtung nach Anspruch 4 und 5, **dadurch gekennzeichnet**, daß die Heizeinrichtung ein die Temperatur bei geschlossener Nachglätthaube (11) vergleichmäßigendes Gebläse (14) aufweist.

7. Vorrichtung nach einem der vorangehenden Ansprüche. **dadurch gekennzeichnet**, daß das Formwerkzeug (1) und die Nachglätthaube (11) an einem Haltebügel (4) in Drehgelenken (5) befestigt sind. wobei der Haltebügel (4) an einer Welle (17) befestigt ist.

8. Vorrichtung nach einem der vorangehenden Ansprüche, **dadurch gekennzeichnet**, daß der vom Formwerkzeug (1) und von der Nachglätthaube (11) umschlossene Werkzeughohlraum an eine Zuführ- und/oder Ausführleitung für Gase und Dämpfe angeschlossen ist.

9. Vorrichtung nach Anspruch 8, **dadurch gekennzeichnet**, daß die Zuführ- und/oder Ausführleitung durch Drehdurchführungen in den Drehgelenken (5), durch den Haltebügel (4), durch die Welle (17). durch eine Drehdurchführung zwischen Welle (17) und einem Träger (18) und durch eine Königswelle (19) verläuft.

10. Vorrichtung nach einem der Ansprüche 8 und 9, **dadurch gekennzeichnet**, daß die Zuführleitungen an eine Inertgasquelle angeschlossen ist.

11. Vorrichtung nach einem der Ansprüche 8 bis 10. **dadurch gekennzeichnet**, daß die Zuführleitung an eine Kühlgasquelle angeschlossen ist.

12. Vorrichtung nach einem der Ansprüche 8 bis 11. **dadurch gekennzeichnet**, daß die Ausführleitung mit einer Aufbereitungsanlage für schädliche Dämpfe und Gase verbunden ist.

*Fig. 1*

Krauss-Maffei AG
8000 München 50
TK 286ᵵ

Fig. 2

Krauss-Maffei AG
8000 München 50
TK 286 a

EP 0 334 073 A2

Fig.3

Krauss-Maffei AG
8000 München 50
TK 286

# Fig.4

Krauss-Maffei AG
8000 München 50
TK 286 e

_Fig.5_

Pulverbeschichten

Strahlerheizstation

Kühlstation

Entformen

Krauss-Maffei AG
8000 München 50
TK 286α